(19) Europäisches Patentamt
European Patent Office
Office européen des brevets

(11) **EP 2 104 044 A1**

(12) **EUROPEAN PATENT APPLICATION**

(43) Date of publication:
**23.09.2009 Bulletin 2009/39**

(51) Int Cl.:
***G06F 17/30*** (2006.01)

(21) Application number: **08173128.3**

(22) Date of filing: **31.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.03.2008 KR 20080024776**

(71) Applicant: **Korea Advanced Institute Of Science And Technology
Daefeon 305-701 (KR)**

(72) Inventors:
• **Whang, Kyu Young
305-335, Yuseong-gu, Daejon (KR)**

• **Kim, Yi Reun
500-910, Buk-gu, Gwangju (KR)**
• **Heo, Jun Seok
137-772, Seocho-gu, Seoul (KR)**
• **Lee, Jung Hoon
305-805, Yuseong-gu, Daejon (KR)**
• **Nguyen, Tuan Quang
305-701, Yuseong-gu, Daejon (KR)**

(74) Representative: **Joly, Jean-Jacques et al
Cabinet Beau de Loménie
158, rue de l'Université
75340 Paris cedex 07 (FR)**

(54) **Query expansion method using augmented terms for improving precision without degrading recall**

(57) The present invention relates to a query expansion method that improves the precision without degrading the recall by using augmented terms. It expands a user query by adding new terms that are related to each term of the query; further expands the query by adding augmented terms, which are conjunctions of the terms; assigns a weight on each term so that augmented terms have higher weights than the other terms.

In order to achieve the objectives, the query expansion of the present invention consists of the steps: (a) expanding the query by selecting related terms, which are related to each term of the query and by adding the related terms to the query; (b) adding augmented terms to the query through (a); and (c) assigning a weight on each term of the expanded query.

FIG. 2

**Description**

BACKGROUND OF THE INVENTION

1. Field of the Invention

The present invention relates to a query expansion method that improves the precision without degrading the recall by using augmented terms. It expands a user query by adding new terms that are related to each term of the query; further expands the query by adding augmented terms, which are conjunctions of the terms; assigns a weight on each term so that augmented terms have higher weights than the other terms.

2. Description of the Related Art

As the amount of data on the Internet increases, search engines have become the main means for retrieving information on the Internet [1]. Search engines receive a combination of terms (i.e., words) as a query from the user, and then, return documents relevant to the query as the result [2]. The effectiveness of search engines is mainly evaluated by precision and recall. Precision measures the ability to retrieve relevant documents among the returned documents. Recall measures the ability to retrieve relevant documents among all the relevant documents [1].

It is difficult to make a query to completely represent the user's intension [3] since vocabulary of the Information Retrieval (IR) system is different from that of a user. The terms used in the query may not match those used in the documents that are stored in the search engines (it is called "the mismatch problem."[3]) For example, suppose the user wants to retrieve documents related to car. The user's query contains one term "car." Documents containing the term "car" and/or the term "automobile" are relevant to car. However, the search engine returns only those documents containing the term in the query (i.e., "car"). Thus, the retrieved documents do not satisfy the user's intension. This mismatch problem generally reduces the precision and recall of the search engines [3].

Now, an extended Boolean model, which is the background art of the present invention, and prior work related to query expansion are described below.

1) Extended Boolean Model

The extended Boolean model combines the retrieval model of the Boolean model and the ranking model of the vector space model [2, 5].

In the Boolean model [1], documents are represented as the sets of terms. Queries consist of the terms connected by three operators: AND, OR, NOT. For a given query, the model retrieves documents that satisfy Boolean expression of the query [1].

In the vector space model [6], documents and queries are represented as vectors in a multi-dimensional vector space. The terms of the model form the multi-dimensional vector space. Each term in a document and a query is given a weight. Weights of terms are commonly calculated by "TF-IDF term weighting scheme" [1]. In the TF-IDF term weighting scheme, a term has more weight if it frequently occurs in one document (i.e., having a high term frequency) and rarely appears in the rest of the document collection (i.e., having a low inverse term frequency) [1]. Documents are ranked according to similarity of the documents to the query. Similarity is calculated by "cosine similarity measure" [1], which is the cosine of angle between two vectors [1]. The cosine similarity of a document $\vec{d}$ to a query $\vec{q}$ is calculated as in Eq. (1) below.

$$similarity(\vec{d}, \vec{q}) = \frac{\vec{d} \bullet \vec{q}}{\left|\vec{d}\right| \bullet \left|\vec{q}\right|} \qquad (1)$$

The cosine similarity is the inner product of the two vectors $\vec{d}$ and $\vec{q}$. That is, the similarity is the sum of the weights of the query terms in the document [1].

The extended Boolean model lies somewhat in between the Boolean model and the vector space model [5]. That is, the extended Boolean model supports the Boolean query and document ranking.

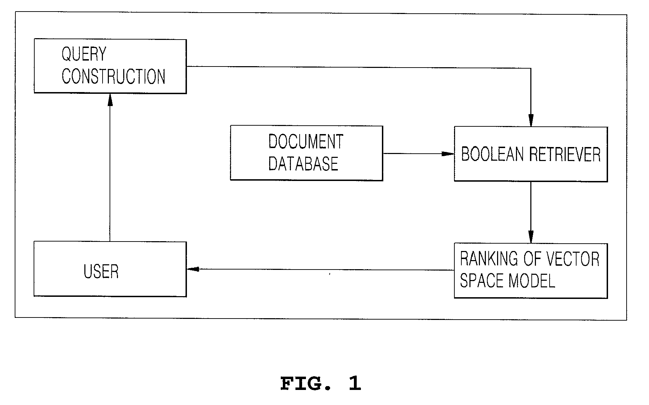

FIG. 1 shows a retrieval model based on the extended Boolean model. The extended Boolean model combines the retrieval model of the Boolean model with the ranking model of the vector space model [2, 5]. Thus, all documents that satisfy the Boolean query are retrieved, and then, those documents are ranked by the cosine similarity measure [1].

Suppose that $W_{A,q}$ and $W_{B,q}$ are the weights of terms $A$ and $B$ in the query, respectively. Suppose that $W_{A,d}$

and $W_{B,d}$ are the weights of terms $A$ and $B$ in the document, respectively. The similarity of the document to the query is calculated as in Eq. (2) [1] for the two base cases (i.e., for "AND" and "OR" operators). The similarity depends on the weights of terms in the document and in the query.

$$similarity(d, A_{W_{A,q}} \ AND \ B_{W_{B,q}}) = similarity(d, A_{W_{A,q}} \ OR \ B_{W_{B,q}})$$
$$= \frac{W_{A,q} \bullet W_{A,d} + W_{B,q} \bullet W_{B,d}}{2} \qquad (2)$$

Table 1 shows the information on a document collection. The document collection in this example contains two documents $d_1$ and $d_2$; $d_1$ contains two terms "petrol" and "car"; $d_2$ contains one term "petrol."

Table 1

| Document (d) | Term | |
| --- | --- | --- |
| | Petrol | Car |
| $d_1$ | 0.4 | 0.3 |
| $d_2$ | 0.9 | 0.0 |

In the document $d_1$, the weights of the term "petrol" and "car" are 0.4 and 0.3, respectively. In the document $d_2$, the weight of the term "petrol" is 0.9. Let us consider two queries $q_{or}$ = "car" or "petrol," $q_{and}$ = "car" and "petrol." Suppose that the weight of "petrol" in $q_{or}$ and $q_{and}$ is 0.7 and the weight of "car" in $q_{or}$ and $q_{and}$ is 0.8.

In case of $q_{or}$, $d_1$ and $d_2$ are retrieved because those documents satisfy the Boolean expression of the query $q_{or}$. In case of $q_{and}$, $d_1$ is only retrieved. Using Eq. (1), the similarities are calculated as in Eqs. (3) and (4). Because similarity $(d_2, q_{or})$ is greater than similarity $(d_1, q_{or})$, the document $d_2$ is ranked higher than the document $d_1$ in case of $q_{or}$.

$$similarity(d_1, q_{or}) = similarity(d_2, q_{and}) = \frac{0.7*0.4+0.8*0.3}{2} = 0.26 \quad [3]$$

$$similarity(d_2, q_{or}) = \frac{0.7*0.9+0.8*0.0}{2} = 0.315 \qquad [4]$$

2) Related work

Query expansion methods related to the present invention are described in detail below.

Kwon et al. [2] proposed a thesaurus reconstructing method, called Domain Adapted Welghted Thesaurus (DAWIT), for enriching domain dependent terms in a thesaurus and proposed a simple query expansion using the thesaurus. DAWIT method expands the query by adding new terms, called *related terms*, that are related to each term of the query. The authors used a thesaurus for finding related terms. DAWIT method expands the query as in the following three steps. First, it finds related terms of each term in the query. Next, it replaces each term in the query with the disjunctions of the term and its related terms. Finally, it assigns a new weight to each term of the expanded query. However, it does not guarantee that a document containing more query terms is ranked higher than other documents.

Salton et al. [5] proposed the query expansion using relevance feedback. The query expansion using relevance feedback selects terms from the recently retrieved documents for query expansion. It combines the terms using AND operator and OR operator. This method uses AND operators to expand the query. However, it does not guarantee that documents having more query terms are ranked higher than other documents. Besides, it does not use the original terms in the query to expand the query.

SUMMARY OF THE INVENTION

The query expansion generally reduces the precision of search engines. For a query that consists of disjunctions of terms, the query expansion in the extended Boolean model does not consider user's preference. Here, the user's preference indicates that users prefer documents having more query terms. An object of the present invention is to provide a query expansion method using augmented terms. It expands a query of a user by adding new terms related to the query, and then, assigns weights to respective terms. The present invention allows us to increase the precision without degrading the recall.

The query expansion of the present invention consists of the following four steps: (1) defining a query model; (2) expanding the query by adding related terms, which are related to each term of the query; (3) further expanding the query by adding augmented terms, which are conjunctions of those related terms; and (4) assigning a weight on each term so that augmented terms have higher weights than the other terms.

In the second step, the proposed query expansion uses the algorithm proposed by Kwon et al. [2] to select related terms from external thesaurus.

In the third step, the augmented terms that are the conjunctions of the terms are added to the query, and accordingly, the query is further expanded. The documents in which query terms co-occur can be identified through the augmented terms. If a document contains an augmented terms, the document contains all the singletons of the augmented terms.

In the forth step, the co-occurrence aware term reweighting scheme is proposed on the basis of the user's preference. This scheme allows a document containing more query terms to be ranked higher than other documents.

In summary, in order to accomplish the objective above, the present invention comprises (a) expanding the query by selecting new terms related to each original term in a query, and then, adding the new related terms to the query; (b) adding augmented terms, which are added as conjunctive terms in (a), to the query; and (c) assigning a weight on each term of the expanded query. Here, we note that the query expansion method comprise (a-1) defining a query model before (a).

In detail, the step (c) consists of the following three steps: (c-1) extracting a set of terms from the expanded query and classifying the terms in the set into original terms, related terms, and augmented terms; (c-2) assigning weights on the original terms, the related terms, and the augmented terms, and then, adding those terms to the query; and (c-3) reweighting the augmented terms.

In the step (c), the weight of an augmented term having ($n$+1) singletons is always greater than that of any augmented term having n singletons. We call the number of singletons in an augmented term as *augmented-term co-ordination level* (simply, *at-co-ordination level*).

The weight of a related term is calculated as the similarity of the original term to the related term. The similarity is measured by the Mutual Information (MI) between two terms $x$ and $y$ as shown in the following Equation:

$$MI(x,y) = \log \frac{\dfrac{number\ of\,(x,y)\ pairs\ in\ document\ collection}{total\ number}}{\dfrac{number\ of\ x}{total\ number} * \dfrac{number\ of\ y}{total\ number}}$$

The augmented terms above always have weights greater than those of the original terms and the related terms.

BRIEF DESCRIPTION OF THE DRAWINGS

FIG. 1 is a conceptual diagram that shows the retrieval model based on an extended Boolean model according to the present invention;
FIG. 2 is a flowchart that shows a query expansion method using augmented terms according to the present invention;
FIG. 3A is an example that shows original terms and related terms of a query according to the present invention;
FIG. 3B is an example that shows a query expansion using the terms of FIG. 3A according to the present invention; and
FIG. 4 is a detailed flowchart that shows the fourth step of assigning weights to respective terms of an expanded query according to the present invention.

DESCRIPTION OF THE PREFERRED EMBODIMENTS

The above and other objectives, features and advantages of the present invention will be more clearly understood from the following detailed description taken in conjunction with the accompanying drawings. It should be noted that, in the following description of the present invention, detailed descriptions may be omitted if it is determined that the detailed descriptions of related well-known functions and construction may make the gist of the present invention unclear.

Hereinafter, embodiments of the present invention will be described in detail with reference to the attached drawings.

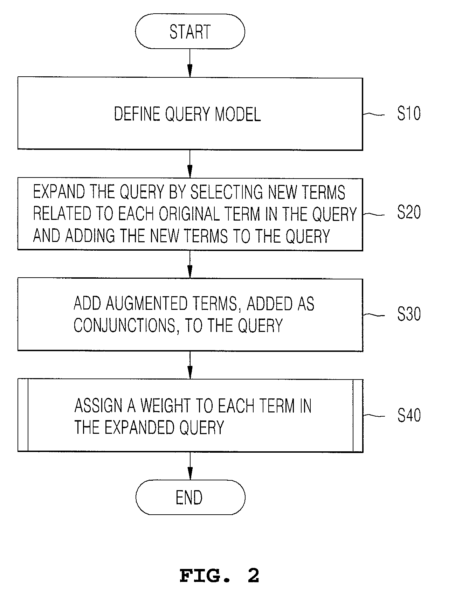

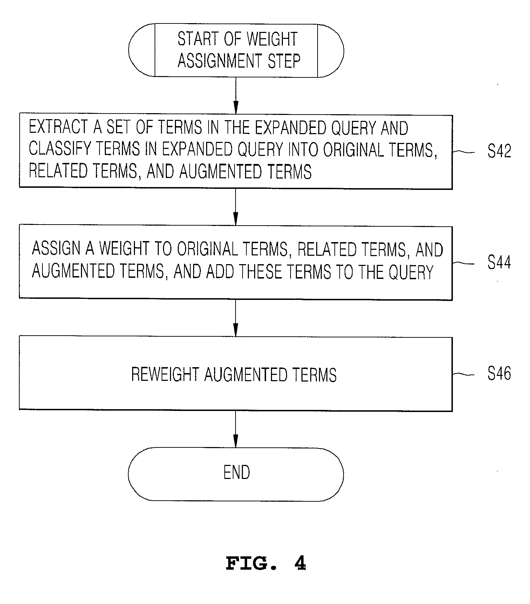

A query expansion method using augmented terms for improving precision without degrading recall according to the present invention will be described with reference to FIGS. 2 or 4. FIG. 2 is a flowchart that shows a query expansion method using augmented terms for improving precision without degrading recall according to the present invention. As shown in FIG. 2, the query expansion method includes the following four steps. In the first step S10, it defines a query model. In the second step S20, it expand the query by selecting new terms related to each original term in a query and adding the new terms to the query. In the third step S30, it adds augmented terms, which are added as conjunctions, to the query. In the fourth step S40, it assigns a weight on each term in the expanded query. The detailed steps are described as follows.

First, a query model is defined in step S10. In the present invention, queries are considered as disjunctions of $m$ terms $(t_1, t_2, \cdots, t_m)$ as shown in the following Eq.(5).

$$q = t_1 \lor t_2 \lor \cdots \lor t_m \qquad (5)$$

Each term is a singleton, a term $t_i (1 \le i \le m)$ is defined as an original term, and a query $q$ is defined as an original query. The notation and terminology used in the following description are summarized in Table 2 below.

Table 2

| Symbol | Description |
|---|---|
| $Q$ | the user's query (or the original query) |
| $ExpandedQuery(q)$ | the expanded query of the query q |
| $RelatedTerm(t)$ | the set of related terms of the term $t$ |
| $t_i$ | an original term in query |
| $t_{ij}$ | a related term of the original term $t_i$ |
| T | an augmented term |
| $W_{t,q}$ | the weight of the term tin the query $q$ |

Thereafter, the second step of expanding the query is performed by selecting new terms related to each original term of the query and adding the new terms to the query in step S20.

In detail, a term related to the term in the query is selected. For example, when a query is 'petrol', the term 'gasoline' can be selected as a term related to the query. For another example, when a query is 'car', the term 'automobile' can be selected as a term related to the query.

The original term $t_i (1 \le i \le m)$ in the query has $p_i$ related terms $t_1, t_2, ..., t_{pi}$. The set of related terms of each term $t_i$ can be represented by $RelatedTerm(t_i) = \{t_{i_1}, t_{i_2}, \cdots, t_{i_{pi}}\}$.

The term $t_i$ can be expanded to $t_i \lor t_{i_1} \lor t_{i_2} \lor \cdots \lor t_{i_{pi}}$ and can be represented $by$ $t_i \lor \left( \bigvee_{j=1}^{P_i} t_{ij} \right)$. That is, each term of the query is replaced with disjunctions of the original term and its related terms.

Therefore, the query in Eq.(5) is expanded to the query in the following Eq.(6).

$$ExpandedQuery(q) = (t_1 \vee (\bigvee_{j=1}^{P_1} t_{1j})) \vee (t_2 \vee (\bigvee_{j=1}^{P_2} t_{2j})) \vee \cdots (t_m \vee (\bigvee_{j=1}^{P_m} t_{mj}))$$

$$(6)$$

In this case, the selection of the related terms is based on the similarity between the original term and each related term. The similarity between terms is measured by the "Mutual Information" (MI) [2]. The similarity and the mutual information are explained in detail in the fourth step below.

Thereafter, in the third step S30, the augmented terms, which are added as conjunctions in Eq. (6), are added to the query.

Users prefer a document with ($n$+1) query terms to that with n query terms [7, 8]. In the present invention, the number of query terms contained in the document is denoted as the 'coordination level' [7]. The third step S30 is explained in detail through definitions and embodiments that are described below.

Definition 1: Let $q$ be a query that is a disjunction of terms. Let $R$ be a set of the original terms and the related terms of the query $q$. Suppose that $t$ is a term of the query $q$. A *query aspect t* is defined as the subset of $R$ containing the term $t$ and the related terms of $t$.

Definition 2: Let $q$ be a disjunction of terms. Let $R$ be a set of the original terms and related terms of the query $q$. An *augmented term τ* is defined as a conjunction of terms in $R$. Here, each singleton in $\tau$ belongs to one distinct *query aspect*.

Definition 3: The *augmented-term co-ordination level* (*at-co-ordination level*) of the augmented term $\tau$ is defined as the number of singletons in $\tau$.

The following embodiment is related to the definitions 1, 2 and 3 above. Let us consider the query $q$ = "petrol" or "car" or "sale." The term "gasoline" is the related term of "petrol"; the term "automobile" is the related term of "car"; the term "selling" is the related term of "sale." That is, $R$ = {"petrol" "car", "sale", "gasoline", "automobile", "selling"}. Here, there are three query aspects: the query aspect "petrol" is {"petrol", "gasoline"}, the query aspect of "car" is {"car", "automobile"}, and the query aspect of "sale" is {"sale", "selling"}. Since ("petrol" and "car") and ("petrol" and "automobile") contain two singletons, they have at-co-ordination level 2. Further, since ("petrol" and "car" and "sale") contains three singletons, it has at-co-ordination level 3. If "petrol" and "car" co-occur in a document $d$, it is regarded that the document $d$ contains the augmented term ("petrol" and "car").

In the present invention, documents in which query terms occur can be identified. Since augmented terms express the co-occurrence of query terms, the documents can be identified through the augmented terms. If a document contains an augmented term, the document also contains the singletons of the augmented term. In addition, one or more augmented terms can be occurred in a document. In order to represent the augmented terms as a query, the augmented terms of the given query $q$ are combined through the disjunctive operator.

When it is assumed that there are $l$ augmented terms $\tau_1$, $\tau_2$, ..., $\tau_l$, the query in Eq.(6) is expanded to the query in Eq.(7) below.

$$ExpandedQuery_{Augmented}(q)$$
$$= (t_1 \vee (\bigvee_{j=1}^{P_1} t_{1j})) \vee (t_2 \vee (\bigvee_{j=1}^{P_2} t_{2j})) \vee \cdots \vee (t_m \vee (\bigvee_{j=1}^{P_m} t_{mj})) \vee (\tau_1 \vee \tau_2 \vee \cdots \vee \tau_l) \qquad (7)$$

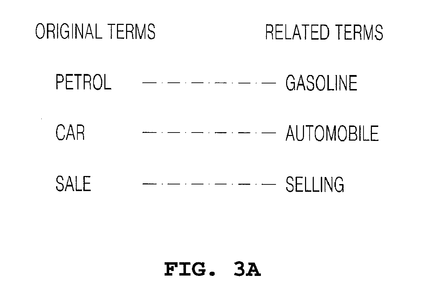

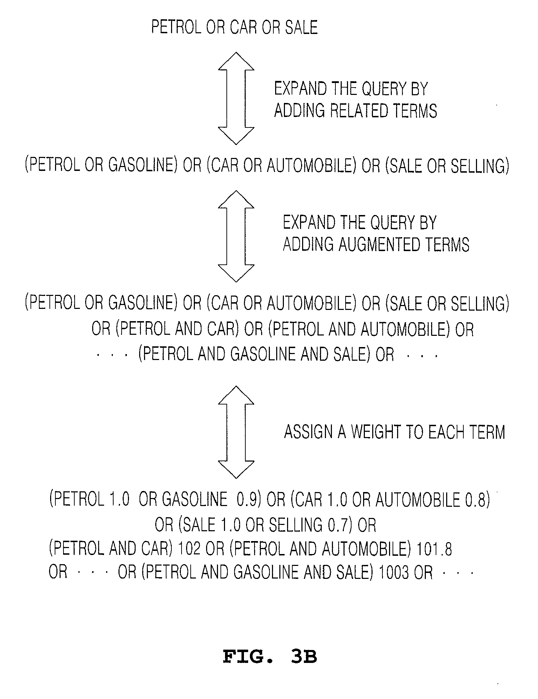

FIG. 3A shows an example of original terms and the related terms in a query, and FIG. 3B shows an example of expanding a query. The terms in the original query are "petrol", "car", and "sale", and their related terms are added to the original query.

That is, the query is expanded to ("petrol" OR "gasoline") OR ("car" OR "automobile") OR ("sale" OR "selling"). Further, the augmented terms ("gasoline", "automobile", "selling") are added to the query. The query is expanded to [("petrol" OR "gasoline") OR ("car" OR "automobite") OR ("sale" OR "selling") OR ("petrol" AND "car") OR ("petrol" AND "automobile") OR ... OR ("petrol" AND "car" AND "sate") OR...].

Thereafter, the fourth step of assigning weights on each term of the expanded query is performed in step S40. That is, as shown in FIG. 4, a set T of the terms of the expanded query is extracted, and the terms of the expanded query are classified into three types of terms - original terms, related terms and augmented terms - in step S42. Weights of the original terms, related terms and augmented terms are assigned in step S42; those terms are added to the query in step S44; and the augmented terms are reweighted in step S46.

The weight of each original term is assigned as 1.0, that of the related term is assigned as the similarity between the original term and the related term, and that of the augmented term is assigned as a weight according to its co-ordination level and similarity.

The weight of each related term is calculated using the algorithm presented by Kwon et al.[2]. The Mutual Information (MI) can be considered as the similarity measure between terms. Thus, in the present invention, weights of related terms are assigned by calculating the similarity to the original term.

The mutual information (MI) between two terms $x$ and $y$ is obtained by measuring the information of $x$ contained in $y$, and vice versa. That is, the value between two terms $x$ and $y$ is computed by the following Eq.(8), and is normalized by $log$ in the range of [0, 1] [10].

$$MI(x, y) = \log \frac{\dfrac{number\ of(x,y)\ pairs\ in\ document\ collection}{total\ number}}{\dfrac{number\ of\ x}{total\ number} * \dfrac{number\ of\ y}{total\ number}} \tag{8}$$

Here, "total number" represents the total number of terms in the document collection.

The method of calculating the weight of each augmented term is described below. Let us consider an augmented term $_\tau$. Then, $|\tau|$ is the at-co-ordination level of $_\tau$. In order to assign a weight to the augmented term, the present invention uses a monotonic function for the at-co-ordination level. In addition, the weights of augmented terms having the at-co-ordination level ($n$+1) are always greater than those of augmented terms having the at-co-ordination level n.

In the present invention, a function used to calculate the weight of the augmented term is $10^{|\tau|}$. For example, the function sets 100 to the weight of an augmented term having the at-co-ordination level 2 and 1000 to that of an augmented term having the at-co-ordination level 3.

Thereafter, in order to reweight the augmented term, the similarities of terms in the augmented term $\tau$ are used. The weight of the augmented term depends on the sum of the weights of the terms in it. The weight of an augmented term $\tau$ in a query $q$ is calculated as the following Eq.(9).

$$W_{\tau,q} = 10^{|\tau|} + \sum_{t \in \tau} W_{t,q} \tag{9}$$

With reference to a portion of the expanded query described in FIG. 3B above, the fourth step of assigning weights to each term in the expanded query is described in detail below.

Let us consider an original query $q$. $q$ = "petrol" OR "car" OR "sale", and $q_{exp}$ = *ExpanedQuery*($q$) = ("petrol" OR "gasoline") OR ("car" OR "automobile") OR ("sale" OR "selling") OR ("petrol" OR "car") OR ("petrol" AND "automobile") OR ... OR ("petrol" AND "car" AND "sale") OR... .

The set $T$ of terms in the expanded query can be represented as follows. $T$ = {"petrol "car", "sale", "gasoline", "automobile", "selling", ("petrol" AND "car"), ("petrol" AND "automobile"), ("petrol" AND "car" AND "sale"), ...}.

That is, the original terms are "petrol", "car", and "sale", related terms are "gasoline", "automobile", and "selling", and augmented terms are ("petrol" AND "car"), ("petrol" AND "automobile"), and ("petrol" AND "car" AND "sate").

Thereafter, the weight of each term in the expanded query $q_{exp}$ is computed. Since terms "petrol", "car", and "sale" are original terms, the weights of these terms are 1.0, and the weights of the related terms "gasoline", "automobile", and "selling" are computed to be 0.9, 0.8, and 0.7, respectively, as in Eq.(8).

The weights of augmented terms ("petrol" AND "car"), ("petrol" AND "automobile") and ("petrol" AND "car" AND "sale") are calculated to be 102, 101.8, and 1003, respectively, as in Eq.(9).

That is, the weight of the augmented term having the at-co-ordination level 3, i.e., ("petrol" AND "car" AND "sale"), is greater than that of the augmented term having the at-co-ordination level 2, i.e., ("petrol" AND "car") and ("petrol" AND "automobile"). The weights of the original terms are greater than those of the related terms. Therefore, in the case of the augmented terms having the same at-co-ordination level, the weight of the augmented term ("petrol" AND "car") is greater than that of the augmented term ("petrol" AND "automobile"). Here, "car" is an original term, and "automobile" is a related term of "car."

In this way, in order to compare the effectiveness of the query expansion using augmented terms with the query expansion using DAWIT [2], extensive experiments were performed. The results of the experiments using the TREC-6 [9] document collection show that the query expansion using augmented terms outperforms the query expansion using DAWIT [2] by up to 102% in precision and by up to 157% in recall for the top-10 retrieved documents.

References

[1] Baeza-Yates, R. and Ribeiro-Neto, B., Modern Information Retrieval, Addison Wesley, 1999.
[2] Kwon, O. W., Kim, M. C., and Choi, K. S., "Query Expansion Using Domain Adapted, Weighted Thesaurus in an Extended Boolean Model," In Proc. 3rd Int'l Conf. on Information and Knowledge Management, pp. 140-146, Gaithers-burg, Maryland, Nov. 1994.
[3] Xu, J. and Croft, W. B., "Improving the Effectiveness of Information Retrieval with Local Context Analysis," ACM Transactions on Information Systems (TOIS), Vol. 18, No. 1, pp. 79-112, Jan. 2000.
[4] Salton, G. and Voorhees, E., "A Comparison of Two Methods for Boolean Query Relevancy Feedback," Information Processing & Management, Vol. 20, No. 5, pp. 637-651, Sept. 1984.
[5] Salton, G., Fox, E. A., and Wu, H., "Extended Boolean Information Retrieval," Communications of the ACM, Vol. 26, No. 12, pp. 1022-1036, 1983.
[6] Salton, G. and Lesk, M. E., "Computer Evaluation of Indexing and Text Processing," Journal of the ACM, Vol. 15, No. 1, pp. 8-36, Jan. 1968.
[7] Clarke, C. L. A., Cormack, G. V., and Tudhope, E. A., "Relevance Ranking for One to Three Term Queries," Information Processing & Management, Vol. 36, No. 2, pp. 291-311, Mar. 2000.
[8] Hiemstra, D., "A Linguistically Motivated Probabilistic Model of Information Retrieval," In Proc. 2nd European Conference on Research and Advanced Technology for Digital Libraries (ECDL), pp. 569-584, Crete, Greece, Sept. 1998.
[9] Voorhees, E. M. and Harman, D., "Overview of the Sixth Text Retrieval Conference (TREC-6)," In Proc 6th Text Retrieval Conference, pp. 1-24, Gaithersburg, Maryland, Nov. 19-21, 1997.
[10] Chung, Y. M. and Lee, J. Y., "Optimization of Some Factors Affecting the Performance of Query Expansion," Information Processing & Management, Vol. 40, No. 6, pp. 891-917, Nov. 2004.

According to the present invention, the query expansion method expands a user query by adding new terms that are related to each term of the query; further expands the query by adding augmented terms, which are conjunctions of the terms; assigns a weight on each term so that augmented terms have higher weights than the other terms. Thus, the query expansion method improves the precision without degrading the recall.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A query expansion method using augmented terms for improving the precision without degrading the recall, consisting of the steps of

   (a) Expanding a query by selecting new terms related to each original term in a query and adding the new related terms to the query;
   (b) Further expanding the query by adding augmented terms, which are added as conjunctions in (a), to the query; and
   (c) Assigning a weight to each term in the expanded query.

2. The query expansion method according to claim 1, further comprising (a-1) defining a query model before (a).

3. The query expansion method according to claim 1 or claim 2, wherein (c) consists of the steps of

   (c-1) extracting a set of terms in the expanded query, and classifying the terms of the expanded query into original terms, related terms, and augmented terms;
   (c-2) assigning weights to the original terms, the related terms, and the augmented terms, as classified in (c-1), and adding the weights to the query; and
   (c-3) Reweighting the augmented terms.

**4.** The query expansion method according to any of claims 1 to 3, wherein (c) is performed such that weights of augmented terms having the at-co-ordination level $(n+1)$ is always greater than those of augmented terms having the at-coordination level $n$.

**5.** The query expansion method according to any of claims 1 to 4, wherein the weight of each related term is assigned by calculating the similarity between the original term and the related term.

**6.** The query expansion method according to claim 5, wherein the similarity is Mutual Information (MI) between two terms $x$ and $y$, and is calculated by the following Equation:

$$MI(x,y) = \log \frac{\dfrac{number \ \ of (x,y) \ \ pairs \ \ in \ \ document \ \ collection}{total \ \ number}}{\dfrac{number \ \ of \ \ x}{total \ \ number} * \dfrac{number \ \ of \ \ y}{total \ \ number}}$$

**7.** The query expansion method according to any of claims 1 to 3, wherein the augmented terms always have weights greater than those of the original terms and the related terms.

**FIG. 1**

START

DEFINE QUERY MODEL — S10

EXPAND THE QUERY BY SELECTING NEW TERMS RELATED TO EACH ORIGINAL TERM IN THE QUERY AND ADDING THE NEW TERMS TO THE QUERY — S20

ADD AUGMENTED TERMS, ADDED AS CONJUNCTIONS, TO THE QUERY — S30

ASSIGN A WEIGHT TO EACH TERM IN THE EXPANDED QUERY — S40

END

**FIG. 2**

ORIGINAL TERMS        RELATED TERMS

PETROL   — · — · — · — · — GASOLINE

CAR     — · — · — · — · — AUTOMOBILE

SALE    — · — · — · — · — SELLING

**FIG. 3A**

PETROL OR CAR OR SALE

EXPAND THE QUERY BY
ADDING RELATED TERMS

(PETROL OR GASOLINE) OR (CAR OR AUTOMOBILE) OR (SALE OR SELLING)

EXPAND THE QUERY BY
ADDING AUGMENTED TERMS

(PETROL OR GASOLINE) OR (CAR OR AUTOMOBILE) OR (SALE OR SELLING)
OR (PETROL AND CAR) OR (PETROL AND AUTOMOBILE) OR
· · · (PETROL AND GASOLINE AND SALE) OR · · ·

ASSIGN A WEIGHT TO EACH TERM

(PETROL 1.0  OR GASOLINE  0.9) OR (CAR 1.0 OR AUTOMOBILE 0.8)
OR (SALE 1.0 OR SELLING 0.7) OR
(PETROL AND CAR) 102 OR (PETROL AND AUTOMOBILE) 101.8
OR · · · OR (PETROL AND GASOLINE AND SALE) 1003 OR · · ·

**FIG. 3B**

START OF WEIGHT
ASSIGNMENT STEP

EXTRACT A SET OF TERMS IN THE EXPANDED QUERY AND
CLASSIFY TERMS IN EXPANDED QUERY INTO ORIGINAL TERMS,
RELATED TERMS, AND AUGMENTED TERMS — S42

ASSIGN A WEIGHT TO ORIGINAL TERMS, RELATED TERMS, AND
AUGMENTED TERMS, AND ADD THESE TERMS TO THE QUERY — S44

REWEIGHT AUGMENTED TERMS — S46

END

**FIG. 4**

**Europäisches Patentamt**
**European Patent Office**
**Office européen des brevets**

# EUROPEAN SEARCH REPORT

Application Number

EP 08 17 3128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KWON O-W ET AL: "Query expansion using domain-adapted, weighted thesaurus in an extended Boolean model" PROCEEDINGS OF THE INTERNATIONAL CONFERENCE ON INFORMATION ANDKNOWLEDGE MANAGEMENT CIKM, ACM, NEW YORK, NY, US, 1 January 1994 (1994-01-01), pages 140-146, XP002292240 * abstract * ----- | 1-7 | INV. G06F17/30 |
| A | KLOK J AND DRIESSEN S AND BRUNNER M: "Some Terms are More Interchangeable then Others" LECTURE NOTES IN COMPUTER SCIENCE, vol. 2406, 2002, pages 303-307, XP002515060 Springer Berlin/Heidelberg * the whole document * ----- | 1-7 | |
| A | US 2007/214158 A1 (KAMEN YAKOV [US]) 13 September 2007 (2007-09-13) * the whole document * ----- | 1-7 | TECHNICAL FIELDS SEARCHED (IPC) G06F |
| A | BUCH P R: "The Last Detail - Is n always > (n-1)?" INLS172, 21 November 1998 (1998-11-21), XP002515061 University of North Carolina, School of Information and Library Science * the whole document * ----- | 1-7 | |

-/--

The present search report has been drawn up for all claims

| Place of search | Date of completion of the search | Examiner |
|---|---|---|
| Munich | 13 February 2009 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number

EP 08 17 3128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BERENCI E AND CARPINETO C AND GIANNINI V: "SUPPORTING SELECTIVE VIEWS OF WEB RETRIEVAL RESULTS: AN INTERFACE AND EVALUATION" PROCEEDINGS OF WEBNET 98 - WORLD CONFERENCE ON THE WWW AND INTERNET & INTRANET, 7 November 1998 (1998-11-07), - 12 November 1998 (1998-11-12) XP002515062 Orlando, Florida, USA chapter 2 | 1-7 | |
| A | CHANG S-C ET AL: "AND-LESS RETRIEVAL: TOWARD PERFECT RANKING" ASIS. PROCEEDINGS OF THE ASIS ANNUAL MEETING, XX, XX, 8 October 1987 (1987-10-08), pages 30-35, XP000748382 Chapter 2 * the whole document * | 1-7 | |
| A | CLARKE C L A AND CORMACK G V AND TUDHOPE E A: "Relevance ranking for one to three term queries" INFORMATION PROCESSING AND MANAGEMENT, vol. 36, no. 2, March 2000 (2000-03), page 311, XP002515063 * the whole document * | 1-7 | **TECHNICAL FIELDS SEARCHED (IPC)** |
| A | WILKINSON R ET AL: "Similarity Measures for Short Queries" TEXT RETRIEVAL CONFERENCE. PROCEEDINGS, XX, XX, 1 November 1995 (1995-11-01), pages 277-285, XP002244000 * page 5, line 1 - line 5 * | 1-7 | |

The present search report has been drawn up for all claims

| Place of search | Date of completion of the search | Examiner |
|---|---|---|
| Munich | 13 February 2009 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 17 3128

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2009

| Patent document cited in search report | Publication date | Patent family member(s) | Publication date |
|---|---|---|---|
| US 2007214158 A1 | 13-09-2007 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Baeza-Yates, R. ; Ribeiro-Neto, B.** Modern Information Retrieval. Addison Wesley, 1999
- **Kwon, O. W. ; Kim, M. C. ; Choi, K. S.** Query Expansion Using Domain Adapted, Weighted Thesaurus in an Extended Boolean Model. *In Proc. 3rd Int'l Conf. on Information and Knowledge Management,* November 1994, 140-146
- **Xu, J. ; Croft, W. B.** Improving the Effectiveness of Information Retrieval with Local Context Analysis. *ACM Transactions on Information Systems (TOIS),* January 2000, vol. 18 (1), 79-112
- **Salton, G. ; Voorhees, E.** A Comparison of Two Methods for Boolean Query Relevancy Feedback. *Information Processing & Management,* September 1984, vol. 20 (5), 637-651
- **Salton, G. ; Fox, E. A. ; Wu, H.** Extended Boolean Information Retrieval. *Communications of the ACM,* 1983, vol. 26 (12), 1022-1036
- **Salton, G. ; Lesk, M. E.** Computer Evaluation of Indexing and Text Processing. *Journal of the ACM,* vol. 15 (1), 8-36
- **Clarke, C. L. A. ; Cormack, G. V. ; Tudhope, E. A.** Relevance Ranking for One to Three Term Queries. *Information Processing & Management,* March 2000, vol. 36 (2), 291-311
- **Hiemstra, D.** A Linguistically Motivated Probabilistic Model of Information Retrieval. *In Proc. 2nd European Conference on Research and Advanced Technology for Digital Libraries (ECDL),* September 1998, 569-584
- **Voorhees, E. M. ; Harman, D.** Overview of the Sixth Text Retrieval Conference (TREC-6. *In Proc 6th Text Retrieval Conference,* 19 November 1997, 1-24
- **Chung, Y. M. ; Lee, J. Y.** Optimization of Some Factors Affecting the Performance of Query Expansion. *Information Processing & Management,* November 2004, vol. 40 (6), 891-917